# EUROPÄISCHE PATENTANMELDUNG

(11) **EP 2 505 794 A2**
(43) Veröffentlichungstag der Anmeldung: **03.10.2012**
(21) Anmeldenummer: 12162423.3
(22) Anmeldetag: 30.03.2012
(51) Int. Cl.: F01K 25/10

(54) **Vorrichtung und Verfahren zur Energieverbrauchsreduzierung eines Kompressors in einem Kältekreislauf durch Abwärme- oder Solarwärmenutzung**

(30) Priorität: 01.04.2011 DE 102011006626
(71) Anmelder: Behr GmbH & Co. KG, 70469 Stuttgart (DE)
(72) Erfinder: Viehrig, Falk, 71069 Sindelfingen (DE)
(74) Vertreter: Grauel, Andreas

(57) **Zusammenfassung**

Die verlegende Erfindung betrifft einen Kältekreislauf (100) mit einem Kompressor (102), einem mit dem Kompressor verbundenen Kondensator (104), einer mit dem Kondensator verbundenen Drossel (106), einem Niederdruckbereich zwischen der Drossel und dem Kompressor, einem im Niederdruckbereich angeordneten Verdampfer, einer mit dem Kondensator verbundene Speisepumpe (112), einem mit der Speisepumpe verbundenen Wärmeüberträger (114) und einer Expansionseinrichtung (116), die mit dem Wärmeübertrager, dem Kondensator und dem Niederdruckbereich verbunden ist.

## Beschreibung

Die vorliegende Erfindung bezieht sich auf eine Vorrichtung zur Energieverbrauchsreduzierung eines Kompressors in einem Kältekreislauf, auf einen verbesserten Kältekreislauf sowie auf ein Verfahren zur Energieverbrauchsreduzierung eines Kompressors in einem Kältekreislauf, die beispielsweise zur Klimatisierung oder Kühlung in einem Fahrzeug oder Gebäude eingesetzt werden können.

In einer herkömmlichen Kompressionskältemaschine wird in einem Kompressor viel Energie aufgewandt, um ein Kältemittel von einem niedrigen Druckniveau auf ein hohes Druckniveau zu heben. Das Kältemittel ist in der Regel vor dem Kompressor und nach dem Kompressor gasförmig und daher kompressibel. Deshalb steigt mit dem Druckniveau auch ein Temperaturniveau des Kältemittels.

Es ist die Aufgabe der vorliegenden Erfindung eine verbesserte Vorrichtung zur Energieverbrauchsreduzierung eines Kompressors in einem Kältekreislauf, einen verbesserten Kältekreislauf sowie ein verbessertes Verfahren zur Energieverbrauchsreduzierung eines Kompressors in einem Kältekreislauf zu schaffen.

Diese Aufgabe wird durch eine Vorrichtung zur Energieverbrauchsreduzierung eines Kompressors in einem Kältekreislauf, einen verbesserten Kältekreislauf sowie ein Verfahren zur Energieverbrauchsreduzierung eines Kompressors in einem Kältekreislauf gemäß den Hauptansprüchen gelöst.

Der vorliegenden Erfindung liegt die Erkenntnis zugrunde, dass zu einem Zeitpunkt in dem eine Kompressionskältemaschine betrieben wird, beispielsweise in einer Fahrzeugklimaanlage oder zur Kühlung, Klimatisierung eines Gebäudes, oft Abwärme oder Solarwärme auf einem nutzbaren Energieniveau verfügbar ist. Bei der Abwärme kann es sich z.B. um Abwärme eines Verbrennungsmotors des Fahrzeugs handeln. Bei Solarwärme kann es sich z.B. um Solarwärme, die durch einen Solarkollektor zur Verfügung gestellt wird, handeln. Diese nutzbare Abwärme, Solarwärme kann in einem parallel zum Kältekreislauf ausgeführten Kreisprozess genutzt werden, um den Kompressor zu entlasten, indem arbeitsfähige Energie aus dem Kreisprozess verwendet wird, um zumindest einen Teil des Kältemittels parallel zum Kompressor auf ein höheres Druckniveau zu befördern. Das kann mittels einer Expansionseinrichtung, beispielsweise einer Strahlpumpe, einer Turbine oder einem kombinierten Expander-Kompressor durchgeführt werden, die von dem parallelen Kreisprozess angetrieben wird. Vorteilhafterweise wird in dem parallelen Kreisprozess dasselbe Kältemittel verwendet, wie im Kältekreislauf. Damit kann ein gemeinsam genutzter Kondensator verwendet, ein Bauteil eingespart sowie Wärmeübertragungsverluste reduziert werden.

Die vorliegende Erfindung schafft eine Vorrichtung zur Energieverbrauchsreduzierung eines Kompressors in einem Kältekreislauf, wobei der Kompressor einen Kompressoreingang und einen Kompressorausgang aufweist, wobei die Vorrichtung die folgenden Merkmale aufweist:
einen Kondensator, mit einem Kondensatoreingang und einem Kondensatorausgang, wobei der Kondensatoreingang mit dem Kompressorausgang verbunden ist;
eine Drossel, mit einem Drosseleingang und einen Drosselausgang, wobei der Drosseleingang mit dem Kondensatorausgang verbunden ist;
einen Niederdruckbereich, der mit dem Drosselausgang und dem Kompressoreingang verbunden ist;
einen Verdampfer, der im Niederdruckbereich angeordnet ist;
einer Speisepumpe mit einem Speisepumpeneingang und einem Speisepumpenausgang, wobei der Speisepumpeneingang mit dem Kondensatorausgang verbunden ist;
einen Wärmeüberträger mit einem Wärmeübertragereingang und einem Wärmeübertragerausgang, wobei der Wärmeübertragereingang mit dem Speisepumpenausgang verbunden ist; und
eine Expansionseinrichtung mit einem Expansionseinrichtungseingang und einem Expansionseinrichtungsausgang sowie einem Ansaugeingang, wobei der Expansionseinrichtungseingang mit dem Wärmeübertragerausgang verbunden ist und der Expansionseinrichtungsausgang mit dem Kondensatoreingang verbunden ist und der Ansaugeingang mit dem Niederdruckbereich verbunden ist.

Unter einem Kältekreislauf kann ein abgeschlossenes System verstanden werden, in dem ein thermodynamischer Kreisprozess stattfinden kann, bei dem Wärme unterhalb einer Umgebungstemperatur aufgenommen und bei einer Temperatur oberhalb der Umgebungstemperatur abgegeben wird.

Unter einem Organic-Rankine-Cycle-Prozess (abgekürzt ORC-Prozess) kann ein abgeschlossenes System verstanden werden, in dem ein thermodynamischer Kreisprozess stattfinden kann, bei dem arbeitsfähige Energie erzeugt wird, durch die Aufnahme von Wärmeenergie oberhalb eines Hochtemperaturniveau und die Abgabe dieser Wärmeenergie bei einer mittleren Temperaturniveau oberhalb der Umgebungstemperatur.

Unter einem Kompressor kann ein Verdichter verstanden werden, der dazu ausgebildet ist, um ein gasförmiges Fluid unter Energieaufwand von einem ersten Zustand an einen Kompressoreingang in einen zweiten Zustand an einen Kompressorausgang zu bewegen. Beispielsweise kann der Kompressor das Fluid von einem niedrigen Druckniveau auf ein mittleres Druckniveau verschieben. Dabei kann das Fluid eine Volumenverringerung und/oder eine Temperaturerhöhung erfahren. Unter einem Kondensator kann ein Wärmeübertrager verstanden werden, der dazu ausgebildet ist, ein Fluid unter Energieabgabe von einem gasförmigen Zustand an einem Kondensatoreingang in einen flüssigen Zustand an einem Kondensatorausgang zu bringen. Dabei kann das Fluid eine Volumenverringerung und/oder eine Temperaturverringerung erfahren. Unter einer Drossel kann ein Expansionsventil verstanden werden, das dazu ausgebildet ist, ein Fluid von einem hohen oder mittleren Druckniveau an einem Drosseleingang auf ein niedriges Druckniveau an einem Drosselausgang zu bringen. Dabei kann das Fluid eine Volumenvergrößerung und/oder eine Temperaturreduzierung erfahren. Ein Niederdruckbereich kann ein Teil des Kältekreislaufs sein, der im Betrieb das niedrige Druckniveau aufweist. Unter einem Verdampfer kann ein Wärmeüberträger verstanden werden, der dazu ausgebildet ist, um ein Fluid unter Energieaufnahme von einem flüssigen Zustand an einem Verdampfereingang in einen gasförmigen Zustand an einem Verdampferausgang zu bringen. Dabei kann das Fluids eine Volumenvergrößerung und/oder eine Temperaturerhöhung erfahren. Unter einer Speisepumpe kann eine Pumpe verstanden werden, die dazu ausgebildet ist, ein Fluid unter Energieaufwand in flüssigem Zustand von einem niedrigen oder mittleren Druckniveau an einem Speisepumpeneingang auf ein hohes Druckniveau an einem Speisepumpenausgang zu bringen. Unter einem Wärmeübertrager kann ein Apparat verstanden werden, der dazu ausgebildet ist, um ein Fluid von einem niedrigen Temperaturniveau an einem Wärmeübertragereingang auf ein hohes Temperaturniveau an einem Wärmeübertragerausgang zu bringen. Eine dazu verwendete thermische Energie kann von einem Wärmestrom, beispielsweise Solarwärme oder Abwärme auf das Fluid übertragen werden, wobei das Fluid von dem Wärmestrom getrennt ist. Dabei kann das Fluid eine Volumenvergrößerung und/oder eine Aggregatszustandsänderung, beispielsweise Verdampfen erfahren. Eine Expansionseinrichtung kann dazu ausgebildet sein, um ein Fluid von einem hohen Druckniveau an einem Expansionseinrichtungseingang auf ein mittleres Druckniveau an einem Expansionseinrichtungsausgang zu entspannen, und dabei freiwerdende arbeitsfähige Energie zu nutzen, um über einen Ansaugeingang ein Fluid von einem niedrigen Druckniveau auf das mittleres Druckniveau am Expansionseinrichtungsausgang zu fördern und/oder komprimieren. Beispielsweise kann die Expansionseinrichtung eine Strahlpumpe, wie ein Ejektor oder eine Turbine oder ein kombinierter Expander-Kompressor sein. Beim Entspannen kann das Fluid eine Volumenvergrößerung und/oder eine Abkühlung erfahren.

Gemäß einer Ausführungsform der vorliegenden Erfindung kann der Verdampfer einen Verdampferausgang aufweisen und der Ansaugeingang der Expansionseinrichtung mit dem Verdampferausgang verbunden sein. Dadurch kann das Fluid parallel zum Kompressor unter Verwendung der freiwerdenden arbeitsfähigen Energie in der Expansionseinrichtung komprimiert werden, und ein hoher Volumenstrom im Verdampfer realisiert werden. An einem Verdampferausgang kann das Fluid aus dem Verdampfer austreten.

Gemäß einer weiteren Ausführungsform der vorliegenden Erfindung kann die Vorrichtung eine weitere Drossel aufweisen, die zwischen dem Kondensatorausgang und dem Ansaugeingang der Expansionseinrichtung angeordnet ist, wobei zwischen der weiteren Drossel und dem Ansaugeingang ein Zwischenwärmeübertrager angeordnet ist. Unter einer weiteren Drossel kann ein Expansionsventil verstanden werden, das dazu ausgebildet ist, um ein Fluid von einem hohen oder mittleren Druckniveau auf ein niedriges Druckniveau zu bringen. Dabei kann das Fluid eine Volumenvergrößerung und/oder eine Temperaturreduzierung erfahren. Unter einem Zwischenwärmeübertrager kann ein Apparat verstanden werden, der dazu ausgebildet ist, um einen ersten Stoffstrom von einem hohen Temperaturniveau auf ein niedriges Temperaturniveau zu bringen dabei kann das Fluid teilweise oder vollständig verdampfen, und dazu ausgebildet ist, um einen zweiten Stoffstrom von einem hohen Temperaturniveau auf ein niedriges Temperaturniveau zu bringen, wobei dem zweiten Stoffstrom durch die Verdampfung des ersten Stoffstromes thermische Energie entzogen wird. Beispielsweise kann der zweite Stoffstrom das Fluid sein. Dadurch kann das Fluid im flüssigen Zustand unterkühlt werden, um eine erhöhte Wärmeaufnahmefähigkeit im Verdampfer zu erreichen.

Gemäß einer weiteren Ausführungsform der vorliegenden Erfindung kann die Vorrichtung einen inneren Wärmeübertrager aufweisen, der zwischen dem Verdampferausgang und dem Kompressoreingang angeordnet ist. Unter einem inneren Wärmeübertrager kann ein Wärmeüberträger verstanden werden, der dazu ausgebildet ist, um das Fluid vor dem Kompressor zu überhitzen, um eine größere Energiemenge im Kältekreislauf transportieren zu können.

Dabei kann der innere Wärmeübertrager zwischen dem Kondensatorausgang und der weiteren Drossel angeordnet sein. Dadurch kann das Fluid im flüssigen Zustand unterkühlt werden, um eine erhöhte Wärmeaufnahmefähigkeit im Verdampfer zu erreichen.

Auch kann der innere Wärmeüberträger zwischen dem Zwischenwärmeübertrager und dem Drosseleingang angeordnet sein. Dadurch kann das Fluid nach dem Zwischenwärmeübertrager weiter abgekühlt werden, um eine hohe Wärmeaufnahmefähigkeit im Verdampfer zu erreichen.

Ferner kann der Zwischenwärmeübertrager zwischen dem Kondensatorausgang und dem Drosseleingang angeordnet sein. Dadurch kann thermische Energie aus einem Fluidstrom abgezogen werden, der anschließend durch die Drossel und durch den Verdampfer strömen wird. Dadurch kann eine erhöhte Wärmeaufnahmefähigkeit im Verdampfer erreicht werden.

Gemäß einer weiteren Ausführungsform der vorliegenden Erfindung kann die Vorrichtung einen Speisevorwärmer aufweisen, der zwischen dem Speisepumpenausgang und dem Wärmeübertragereingang angeordnet ist und zwischen dem Kompressorausgang und dem Kondensatoreingang angeordnet ist. Unter einem Speisevorwärmer kann ein Wärmeüberträger verstanden werden, der dazu ausgebildet ist, um dem Fluid nach dem Kompressor Wärme zu entziehen, um die Wärme für eine zusätzliche Energiegewinnung im ORC-Prozess zu nutzen.

Gemäß einer weiteren Ausführungsform der vorliegenden Erfindung kann der Kondensator einen Sammler aufweisen, der vor dem Kondensatorausgang angeordnet ist, oder alternativ bzw. ergänzend die Vorrichtung ein erstes Ventil, ein zweites Ventil und ein Rückschlagventil aufweisen, wobei das erste Ventil zwischen dem Speisepumpeneingang und dem Drosseleingang angeordnet ist, das zweite Ventil vor dem Ansaugeingang angeordnet ist und das Rückschlagventil nach dem Kompressorausgang angeordnet ist. Unter einem Sammler kann ein Ausgleichsbehälter und/oder ein Vorratsbehälter verstanden werden, der dazu ausgebildet ist, um das Fluid nach dem Kondensator aufzufangen, und zu bevorraten. Dadurch können unterschiedliche Betriebszustände des Kältekreislaufs gefahren werden, ohne dass der Kältekreislauf durch Überdruck oder Unterdruck stark belastet wird. Unter einem Ventil und einem Rückschlagventil kann eine Absperreinrichtung verstanden werden, die dazu ausgebildet ist, eine fluidische Verbindung reversibel zu trennen, wobei das Rückschlagventil ausgebildet ist, nur in eine Richtung zu sperren, und in die andere Richtung durchzulassen. Durch eine Abtrennung des Kältekreislaufs von dem ORC-Prozess kann der ORC-Prozess zum Abtransport der Abwärme verwendet werden, beispielsweise zur Unterstützung des Motorkühlers in Fahrzeugen, ohne den Kältekreislauf zu verwenden. Dadurch kann mit einem geringen Energieeinsatz an der Speisepumpe eine große Energiemenge vom Wärmeübertrager zum Kondensator transportiert werden.

Die vorliegende Erfindung schafft ferner einen Kältekreislauf mit folgenden Merkmalen:
einem Kompressor, der einen Kompressoreingang und einen Kompressorausgang aufweist; und
einer Vorrichtung zur Energieverbrauchsreduzierung des Kompressors, gemäß einer der Ausführungsform der vorliegenden Erfindung.

Die vorliegende Erfindung schafft ferner ein Verfahren zur Energieverbrauchsreduzierung eines Kompressors in einem Kältekreislauf, mit folgenden Schritten:
Komprimieren eines Fluids aus einem Niederdruckbereich des Kältekreislaufs in einen Mitteldruckbereich des Kältekreislaufs;
Kondensieren des Fluids im Mitteldruckbereich;
Entspannen des Fluids aus dem Mitteldruckbereich in den Niederdruckbereich;
Verdampfen des Fluids im Niederdruckbereich;
Pumpen des Fluids aus dem Miteldruckbereich in einen Hochdruckbereich;
Erwärmen mit möglicher Aggregatzustandsänderung des Fluids im Hochdruckbereich;
Expandieren des Fluids aus dem Hochdruckbereich in den Mitteldruckbereich unter Abgabe von arbeitsfähiger Energie; und

Fördern des Fluids aus dem Niederdruckbereich in den Mitteldruckbereich unter Verwendung der arbeitsfähigen Energie, um den Energieverbrauch des Kompressors zu reduzieren.

Vorteilhafte Ausführungsbeispiele der vorliegenden Erfindung werden nachfolgend Bezug nehmend auf die beiliegenden Zeichnungen näher erläutert. Es zeigen:
- Figuren 1a, 1 b, 2 bis 6: Darstellungen unterschiedlicher Ausführungsbeispiele einer erfindungsgemäßen Vorrichtung zur Energieverbrauchsreduzierung eines Kompressors in einem Kältekreislauf;
- Fig. 7: Beispielhafte Darstellung des Ausführungsbeispiels gemäß Fig. 4 einer erfindungsgemäßen Vorrichtung mit zusätzlichen Absperrventilen zur möglichen Abtrennung des Kompressor-Kältekreislaufes, so dass Abwärme z.B. Motorabwärme von Fahrzeugen mit geringem Energieaufwand über den Kondensator abgeführt werden kann
- Fig. 8: ein Enthalpie-Druck-Diagramm mit einem parallel zu einem Kältekreislauf ablaufenden Verfahren zur Energieverbrauchsreduzierung eines Kompressors in einem Kältekreislauf gemäß einem Ausführungsbeispiel der vorliegenden Erfindung; und
- Fig. 9: ein Ablaufdiagramm eines Verfahrens zur Energieverbrauchsreduzierung eines Kompressors in einem Kältekreislauf gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

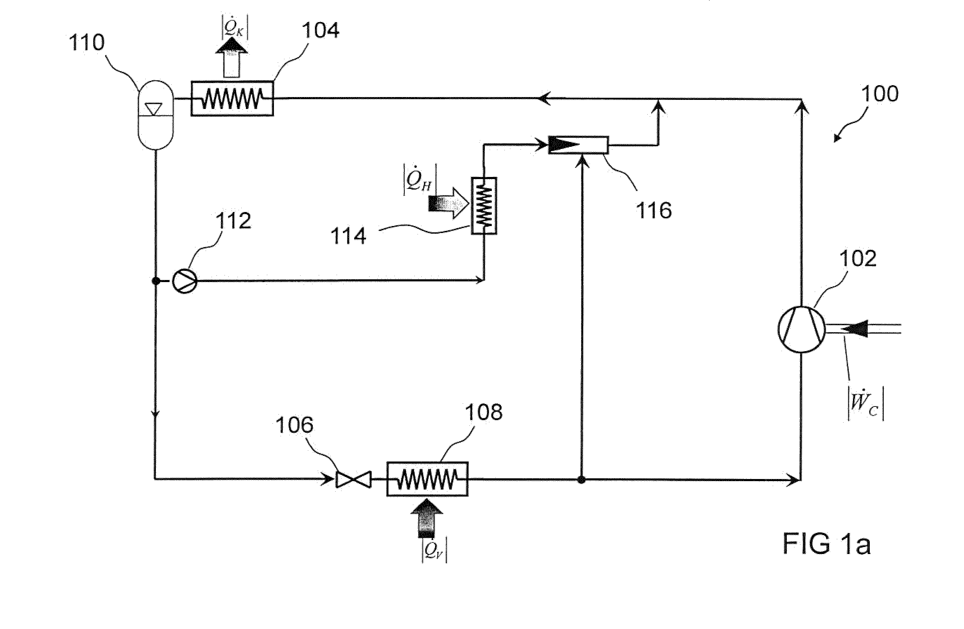

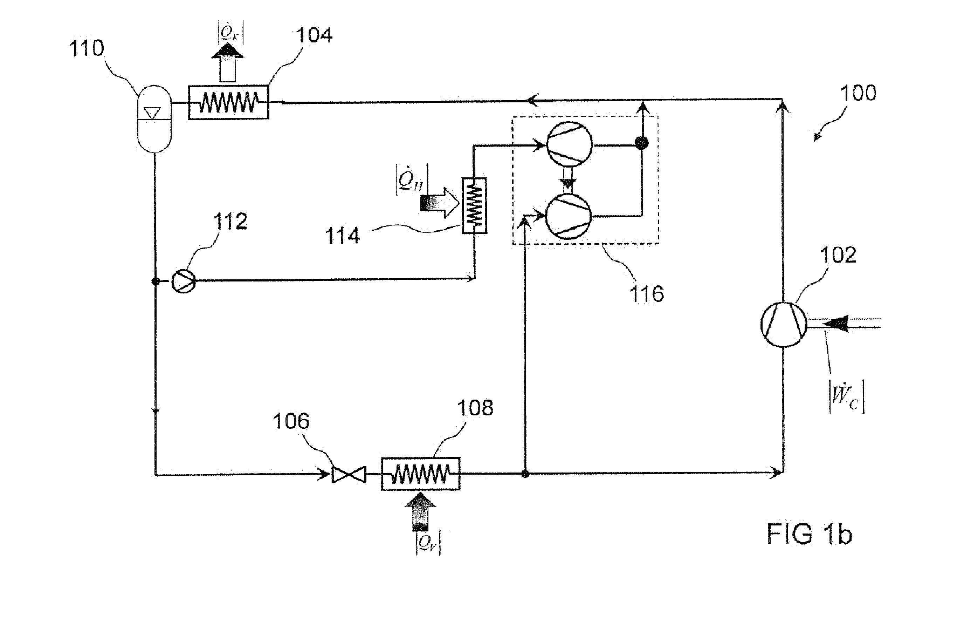

Die Figuren 1 bis 7 zeigen jeweils einen Kältekreislauf 100 gemäß unterschiedlichen Ausführungsbeispielen der vorliegenden Erfindung. Dabei sind verschiedene Ausführungsbeispiele eines Kältekreislaufs 100 mit Abwärmenutzung oder Solarwärmenutzung über einen ORC-Prozess 800 und integrierter Wärmerückgewinnung gezeigt. Dabei wird ein gemeinsames Fluid verwendet und ein gemeinsamer Kondensator 104 genutzt.

Häufig steht Abwärme |*Q̇_{H}*| zur Verfügung, wenn eigentlich gekühlt werden muss. Mit den in den Figuren 1 bis 6 gezeigten Verschaltungen kann Abwärme |*Q̇_{H}*| mit hohem Temperaturniveau zum zusätzlichen Antrieb eines Kältekreislaufs 100 genutzt und somit eine notwendige Antriebsleistung |*Ẇ_{C}*|des eigentlichen Kompressors 102 reduziert werden. Dabei besteht ein Zusammenhang von bereitstehender Abwärme |*Q̇_{H}*| und benötigten Kältebedarf, so dass die bereitstehende Abwärme und der benötigte Kältebedarf zusammen passen. Bei erhöhtem Kältebedarf steht mehr Abwärme |*Q̇_{H}*| zur Verfügung. Bekannte Prozesse z.B. ein Sorptionsprozess oder ein Dampfstrahlprozess sind nicht oder nur schwer kombinierbar mit heutigen Kaltdampf-Systemen. Daher bietet sich eine sehr einfache Umsetzung in allen Kaltdampf-Kreisprozessen z.B. durch Einsatz eines Ejektors 116 an. Dabei ist eine Nutzung von Abwärme |*Q̇_{H}*| mit ca. 50°C bis 180°C möglich. Vorteilhafterweise liegt die Abwärme |*Q̇_{H}*| mit einem Temperaturniveau von 80°C bis 130°C vor. Der hier vorgestellte Ansatz ist in jedem Kaltdampf-Kältekreisprozess integrierbar und für jedes Leistungsniveau einsetzbar. Unabhängig von der Art der eingesetzten Medien in Verdampfer 108 und Kondensator 104, wie beispielsweise Trockenverdampfung, luftgekühlte Kondensation, verdunstungs- oder wassergekühlte Kondensation, kann die hier vorgestellte Vorrichtung auch in dezentralen Anwendungen wie Klimasplitgeräten umgesetzt werden. Genauso ist die hier vorgestellte Vorrichtung auch in zentralen Großanwendungen z.B. Kältemaschine zur Kaftwassererzeugung einsetzbar. Durch eine Vorschaltung als Unterkühlungsoptimierung ist die zur Verfügung stehende Abwärmemenge |*Q̇_{H}*| unabhängig von der erforderlichen Kälteleistung. Eine Verwendung von nur einem Kältemittel im ORC-Prozess (800) und Kältkreislauf (100) ist möglich. Dadurch ergibt sich eine Verringerung von Wärmeübertragungsverlusten. Die hier vorgestellte Vorrichtung ist auch als Wärmepumpe einsetzbar oder es ist eine Umkehrschaltung von Kälte auf Wärme möglich. Die hier vorgestellte Vorrichtung ist in allen direkt verdampfenden Systemen wie zum Beispiel Multisplit-Klimageräten einsetzbar und auch in Fahrzeugen einfach zu integrieren.

Dazu wird ein zusätzlicher Wärmeüberträger 114 mit flüssigem Kältemittel durch eine Speisepumpe 112 versorgt. Die Speisepumpe 112 übernimmt dabei den Druckhub vom Kondenstionsdruck- auf das Hochtemperatur-Druckniveau. Das flüssige Kältemittel wird dann in dem Wärmeüberträger 114 bei entsprechend zur Verfügung stehendem Temperaturniveau erwärmt, verdampft und eventuell überhitzt. Danach wird der unter hohem Druck und hoher Temperatur stehende Kältemitteldampf über eine Expansionseinrichtung 116 z.B. eine Turbine, ein Dampfstrahl-Ejektor oder ein kombinierter Expander-Kompressor, auf das niedriger liegende Kondensationsdruckniveau geführt. Hierbei wird der arbeitsfähige Anteil des Enthalpiestroms ausgekoppelt und dabei arbeitsfähige Energie freigesetzt, wie in einem ORC-Prozess.

Ein Teil des nach der Kondensation vorliegenden flüssigen Kältemittels kann über eine Drossel 200 auf ein Mitteldruckniveau zwischen Verdampfungs- und Kondensationsdruckniveau des Kaltdampfprozesses entspannt werden. Bei seiner Verdampfung in einem weiteren Wärmeüberträger 202 wird dabei das flüssige Kältemittel des Kältekreislauf 100 unterkühlt.

Das verdampfte Kältemittel im Mitteldruckniveau kann durch die aus dem ORC-Prozess (800) gewonnene arbeitsfähige Energie durch Kompression auf das Kondensationsdruckniveau komprimiert werden. Damit kann durch einen Abwärmestrom mit hoher Temperatur eine zusätzliche Unterkühlung und damit Leistungsoptimierung im klassischen Kältekreislauf 100 erzielt werden.

Alternativ oder ergänzend kann zusätzlich Kälteleistung durch die Parallelschaltung des durch den ORCProzess (800) angetriebenen Kaltdampf-Kältekreisprozess zum normal angetriebenen Kältekreislauf 100 abgeführt werden. Durch die Integration eines zusätzlichen Wärmeübertragers als Speisevorwärmer 300 kann die Überhitzungswärme aus dem Kältekreislauf 100 nach der Kompression in den ORC-Prozess zur Vorerwärmung zurückgeführt werden und somit dort eine Optimierung erfolgen.

Durch die Anordnung von Ventilen 700, 702, 704 in den Kreisläufen ist es möglich den Kondensator 104 in Fahrzeugen als zusätzlichen Rückkühler von z.B. Motorabwärme zu benutzen.

Mit anderen Worten zeigen die Figuren 1 bis 7 Ausführungsbeispiele eines Kältekreislauf 100 mit so angeordneten Wärmeübertragern, dass der arbeitsfähige Anteil eines zusätzlichen zur Verfügung stehenden Wärmestromes |*Q̇_{H}*| z.B. Abwärme aus Motoren, Solarwärme oder sonstige Abwärmeströme, durch eine Rückführung ähnlich einem ORC-Prozess, z.B. über einen Ejektor 116, eine Turbine oder einen kombinierten Expander-Kompressor, in arbeitsfähige Energie oder Bewegungsenergie umgewandelt wird. Die dadurch zur Verfügung stehende Antriebsenergie kann genutzt werden, um über einem parallelen Verdampfungsprozess den Kältekreislauf 100 durch zusätzliche Unterkühlung und damit Reduzierung des Dampfanteiles zur Leistungssteigerung bei Eintritt in den Verdampfer 108 zu optimieren. Alternativ oder ergänzend kann ein paralleler Verdampfungsprozess zusätzlich Kälteleistung abführen. Bei entsprechender Auslegung und zur Verfügung stehender Abwärmemenge ist sogar ein autarker Betrieb zur Bereitstellung der erforderlichen Kälteleistung möglich, so dass der Kompressor 102 des Kältekreislaufs 100 komplett abgeschaltet werden kann. Ein Einsatz des gleichen Kältemittels in beiden Kreisläufen ist möglich. Dadurch kann der gleiche Kondensator-Wärmeübertrager 104 zur Kondensation des Kältemittels genutzt werden. Eine Effizienzsteigerung ist durch einen zusätzlich integrierten Speisevorwärmer 300 zur Optimierung einer Wärmerückführung möglich. Durch ein zusätzliches Verschalten mit einem klassischen inneren Wärmeübertrager 500 (IWT) zwischen Sauggas und flüssigem Kältemittel, wobei die Anordnung des IWT vor oder hinter dem Unterkühler 202 in Flussrichtung des Kältemittels vor dem Drosselorgan 106 des Kältekreislauf 100 sein kann, ist eine weitere Verbesserung der Effizienz möglich. Eine Nutzung des Kondensators 104 als Zusatzkühler zum Beispiel in Fahrzeugen zur Unterstützung der Motorkühlung ist möglich. Der vorgestellte Kreisprozess ist als Wärmepumpenkreisprozess und Kältekreisprozess ausführbar oder durch entsprechende Vorrichtung zwischen beiden umschaltbar.

Fig. 1a zeigt einen Kältekreislauf 100 gemäß einem Ausführungsbeispiel der vorliegenden Erfindung. Gezeigt ist ein optimierter Kaltdampf-Kreisprozess durch Abwärmenutzung oder Solarwärmenutzung. Der Kältekreislauf 100 weist einen Kompressor 102, einen Kondensator 104, eine Drossel 106 sowie einen Verdampfer 108 auf. Dem Kondensator 104 ist ein Sammler 110 nachgeschaltet. Zusätzlich weist die Vorrichtung Speisepumpe 112, einen Wärmeübertrager 114 sowie eine Expansionseinrichtung 116 auf. In diesem Ausführungsbeispiel ist die Expansionseinrichtung 116 ein Ejektor 116. Der Kältekreislauf 100 ist mit einer einfach parallel geschalteten Abwärmenutzung oder Solarwärmenutzung über einen ORC-Prozess verbessert.

Der Kompressor 102 weist einen Kompressoreingang und einen Kompressorausgang auf. Der Kondensator 104 weist einen Kondensatoreingang und einen Kondensatorausgang auf. Der Kondensatoreingang ist mit dem Kompressorausgang fluidisch verbunden. Zur fluidischen Verbindung kann eine geeignete Fluidleitung eingesetzt werden. Die Drossel 106 weist einen Drosseleingang und einen Drosselausgang auf. Der Drosseleingang ist mit dem Kondensatorausgang fluidisch verbunden. Der Verdampfer 108 weist einen Verdampfereingang und einen Verdampferausgang auf. Der Verdampfereingang ist fluidisch mit dem Drosselausgang verbunden. Der Verdampferausgang ist fluidisch mit dem Kompressoreingang verbunden. Die Speisepumpe 112 weist einen Speisepumpeneingang und einen Speisepumpenausgang auf. Der Speisepumpeneingang ist mit dem Kondensatorausgang fluidisch verbunden. Der Wärmeübertrager 114 weist einen Wärmeübertragereingang und einen Wärmeübertragerausgang auf. Der Wärmeübertragereingang ist mit dem Speisepumpenausgang fluidisch verbunden. Der Ejektor 116 weist einen Ejektoreingang, einen Ejektorausgang, sowie einen Ansaugeingang auf. Der Ejektoreingang ist mit dem Wärmeübertragerausgang fluidisch verbunden. Der Ejektorausgang ist mit dem Kondensatoreingang fluidisch verbunden. Der Ansaugeingang ist in diesem Ausführungsbeispiel mit dem Verdampferausgang fluidisch verbunden. Im Betrieb wird dem Kompressor 102 mechanische Energie |*Ẇ_{C}*| als Antriebsleistung zugeführt. Damit verschiebt der Kompressor 102 ein Druckniveau eines Fluids, in diesem Ausführungsbeispiel ein Kältemittel, unter Energieaufwand von einem niedrigen Druckniveau in ein hohes Druckniveau. Dabei wird das Fluid komprimiert und erwärmt. Das Fluid wird nun zum Kondensator 104 geleitet, wo es thermische Energie |*Q̇_{H}*| in Form von Wärme abgibt. Dabei wird das Fluid ganz oder teilweise verflüssigt. Eine Temperatur des Fluids kann im Kondensator 104 sinken. Vom Kondensator 104 gelangt das Fluid in den Sammler 110. Der Sammler 110 bevorratet das Fluid bevor es weiter zur Drossel 106 strömt. In der Drossel 106 wird das Fluid entspannt. Dabei sinkt die Temperatur des Fluids. Das Fluid kann bereits teilweise verdampfen. Von der Drossel 106 gelangt das Fluid in den Verdampfer 108. Der Verdampfer befindet sich in einem Niederdruckbereich des Kältekreislaufs 100. Hier nimmt das Fluid thermische Energie |*Q̇_{V}*| in Form von Wärme auf und verdampft dabei vollständig. Dabei kann sich die Temperatur des Fluids erhöhen. Vom Verdampfer 108 strömt das Fluid zum Kompressor, um den Kreislauf erneut zu beginnen. Bei dem hier vorgestellten Ansatz wird zwischen dem Sammler 110 und der Drossel 106 ein Teil des Fluids in flüssigem Zustand abgezweigt. In der Speisepumpe 112 wird das Fluid unter Energieeinsatz von einem Kondensationsdruckniveau auf ein höheres Druckniveau verschoben. Da das Fluid in flüssigem Zustand ist, wird das Fluid in der Speisepumpe 112 vernachlässigbar komprimiert und erwärmt. Von der Speisepumpe 112 fließt das Fluid in den Wärmeübertrager 114. Im Wärmeübertrager 114 nimmt das Fluid thermische Energie |*Q̇_{H}*| aus Abwärme oder Solarwärme auf. Dabei kann das Fluid teilweise oder vollständig verdampfen und sein Volumen vergrößern. Im Wärmeübertrager 114 kann die Temperatur des Fluids ansteigen. Von dem Wärmeübertrager 114 gelangt das Fluid in die Expansionseinrichtung 116. In der Expansionseinrichtung 116 wird die im Fluid enthaltene Energie teilweise in arbeitsfähige Energie umgewandelt. Mit der arbeitsfähigen Energie wird ein Teilstrom des Fluids aus dem Niederdruckbereich auf das Kondensationsdruckniveau gehoben. Damit ist weniger mechanische Energie |*Ẇ_{C}*| am Kompressor 102 notwendig, um die thermische Energie |*Q̇_{V}*| im Verdampfer 108 aufzunehmen.

Fig. 1b zeigt einen Kältekreislauf 100 gemäß einem Ausführungsbeispiel der vorliegenden Erfindung. Abweichend zu den in Fig. 1a dargestellten Merkmalen zeigt Fig. 1b in diesem Ausführungsbeispiel die Expansionseinrichtung 116 als kombinierten Expander-Kompressor 116.

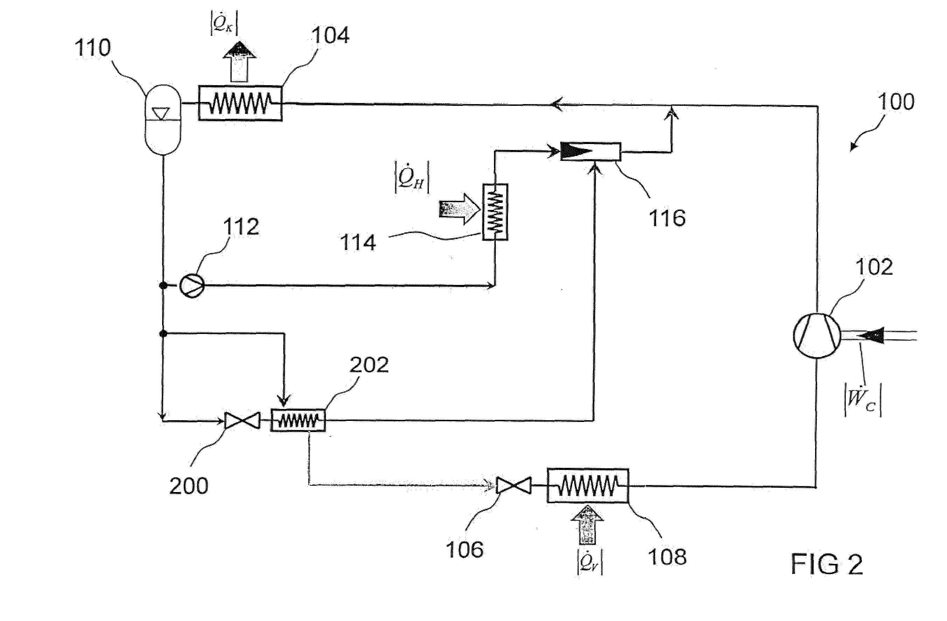

Fig. 2 zeigt eine Darstellung eines Kältekreislaufs 100 gemäß einem weiteren Ausführungsbeispiel der vorliegenden Erfindung. Zusätzlich zu den in Fig. 1 dargestellten Merkmalen zeigt Fig. 2 eine weitere Drossel 200 und einen nachgeschalteten Zwischenwärmeübertrager 202.

In dem in Fig. 2 gezeigten Ausführungsbeispiel besteht eine zusätzliche Verzweigung des Kältekreislaufs 100 zwischen dem Sammler 110 und der Drossel 106. Neben dem Teilstrom durch die Speisepumpe 112 zweigt ein weiterer Teilstrom durch die weitere Drossel 200 ab. In der weiteren Drossel 200 wird der weitere Teilstrom entspannt. Dabei sinkt die Temperatur des weiteren Teilstroms. Anschließend durchströmt der weitere Teilstrom den Zwischenwärmeübertrager 202. Im Zwischenwärmeübertrager 202 nimmt der weitere Teilstrom thermische Energie, durch teilweise oder vollständige Verdampfung, auf. Ein Ausgang des Zwischenwärmeübertragers 202 ist mit dem Ansaugeingang des Ejektors 116 verbunden. Der Fluidstrom durchströmt ebenfalls den Zwischenwärmeübertrager 202 und gibt dort die thermische Energie ab. Dadurch sinkt eine Temperatur des Fluidstroms. Der Fluidstrom wird in der Drossel 106 entspannt und weist aufgrund der niedrigen Temperatur des Fluidstroms vor der Drossel 106 niedrigere Drosselverluste als in Fig. 1 auf. Dadurch kann im Verdampfer 108 eine größere thermische Energiemenge |*Q̇_{V}*| aufgenommen werden. Wenn das Fluid am Verdampferausgang die gleiche Temperatur aufweist, wie im Fig. 1, kann das Fluid im Verdampfer 108 eine größere Energiemenge pro Volumeneinheit aufnehmen.

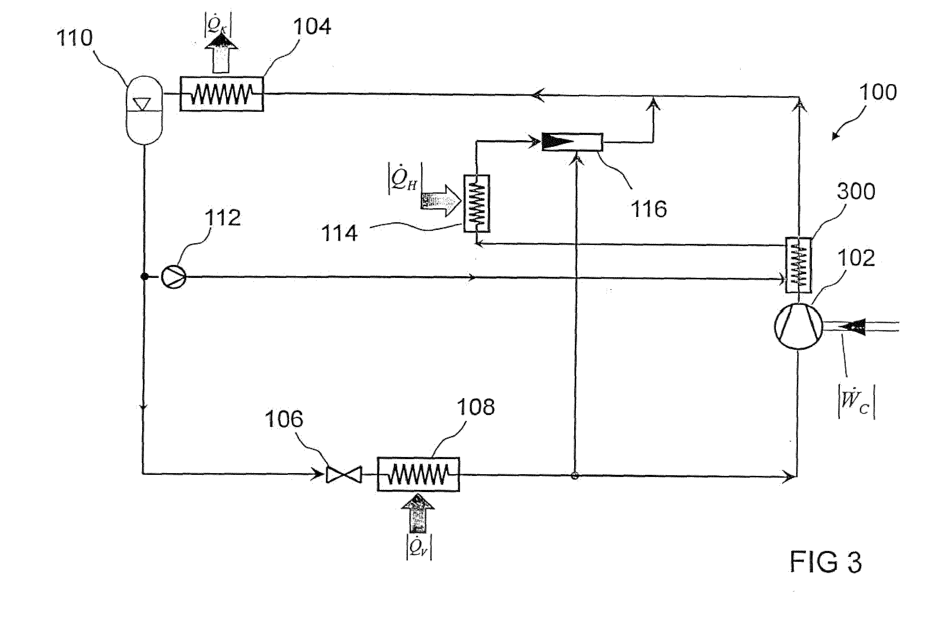

Fig. 3 zeigt eine Darstellung eines Kältekreislaufs 100 gemäß einem Ausführungsbeispiel der vorliegenden Erfindung. Zusätzlich zu den in Fig. 1 dargestellten Merkmalen zeigt Fig. 3 im ORC-Prozess einen Speisevorwärmer 300 zur Wärmerückgewinnung. Der Speisevorwärmer 300 ist nach dem Kompressorausgang in den Kältekreislauf 100 integriert. Das während dem Komprimieren erhitzte Fluid gibt im Speisevorwärmer 300 thermische Energie ab. Die thermische Energie wird von dem Teilstrom des Fluids durch die Speisepumpe 112 aufgenommen. Anschließend erhitzt die thermische Energie |*Q̇_{H}*| das Fluid im Wärmeübertrager 114 weiter. Dadurch steht im Ejektor 116 mehr arbeitsfähige Energie zum Ansaugen des Fluids aus dem Niederdruckbereich am Ansaugeingang zur Verfügung. Der Ejektor 116 kann den Kompressor 102 damit stärker entlasten.

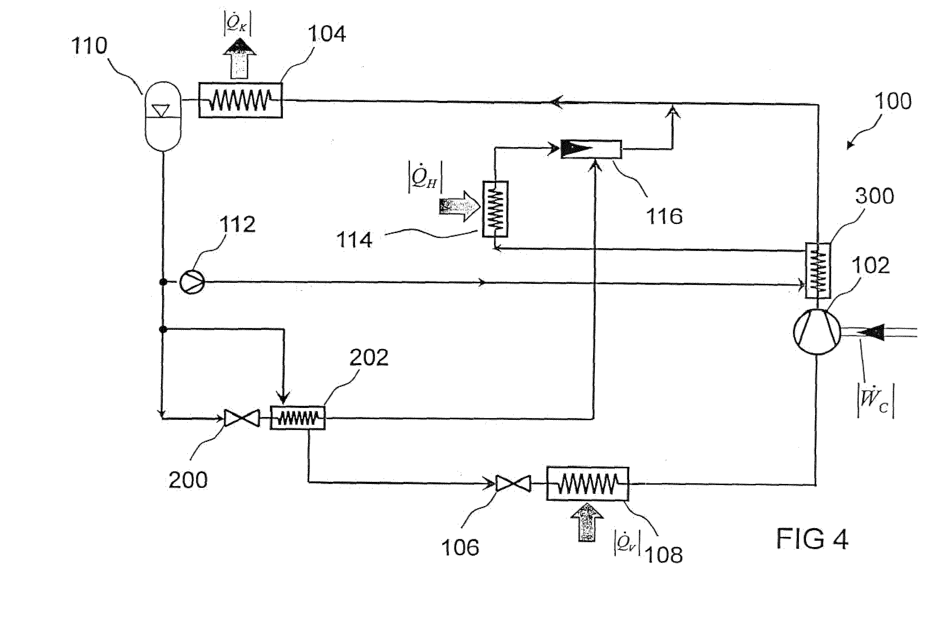

Fig. 4 zeigt eine Darstellung eines Kältekreislaufs 100 gemäß einem Ausführungsbeispiel der vorliegenden Erfindung. Der Kältekreislauf 100 weist alle Merkmale der in den Figuren 1, 2 und 3 gezeigten Kältekreisläufe auf.

Ein Fluidstrom durch die Drossel 106 und den Verdampfer 108 wird durch einen weiteren Teilstrom des Fluids durch die Drossel 200 und den Zwischenwärmeübertrager 202 vorgekühlt. Der Teilstrom des Fluids durch die Speisepumpe 112 wird im Speisevorwärmer 300 vorgewärmt, bevor es durch den Wärmeübertrager 114 fließt. Durch das Vorwärmen im Speisevorwärmer 300 kann im Ejektor 116 mehr arbeitsfähige Energie bereitgestellt werden, um den weiteren Teilstrom des Fluids durch die weitere Drossel 200 zu komprimieren. Durch die Vorkühlung im Zwischenwärmeübertrager 202 kann das Fluid im Verdampfer 108 eine größere thermische Energiemenge |*Q̇_{V}*| aufnehmen. Insgesamt wird so eine Energieeffizienz des Kältekreislaufs 100 erhöht.

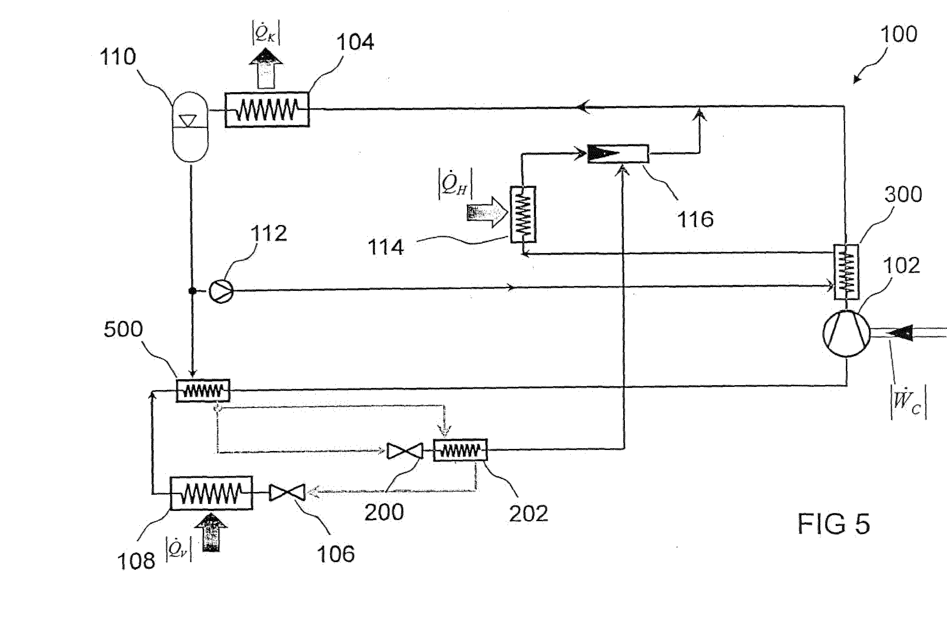

Fig. 5 zeigt eine Darstellung eines Kältekreislaufs 100 gemäß einem Ausführungsbeispiel der vorliegenden Erfindung. Der Kältekreislauf 100 weist einen internen Speisevorwärmer 300 und einen vorgeschalteten inneren Wärmeübertrager 500 (IWT) auf. Neben den Merkmalen des in den Figuren 1, 2, 3 und 4 gezeigten Kältekreislaufs weist der Kältekreislauf 100 den inneren Wärmeübertrager 500 auf.

Der innere Wärmeüberträger 500 ist zwischen den Verdampfer 108 und dem Kompressor 102 angeordnet. Im inneren Wärmeüberträger 500 nimmt das aus dem Verdampfer 108 ausströmende Fluid weitere thermische Energie auf, bevor es im Kompressor 102 komprimiert wird. Im inneren Wärmeübertrager 500 wird das Fluid überhitzt. Die thermische Energie wird von dem Fluid abgegeben, das von Sammler 110 zur Drossel 106, sowie zur weiteren Drossel 200 fließt. Dadurch kann nach der weiteren Drossel 200 Während des Verdampfungsvorgangs mehr Energie aufgenommen werden. Im angeschlossenen Zwischenwärmeübertrager 202 wird das Fluid das zur Drossel 106 strömt weiter abgekühlt. Dadurch kann im Verdampfer 108 die thermische Energie |*Q̇_{V}*| auf einem noch niedrigeren Energieniveau aufgenommen werden.

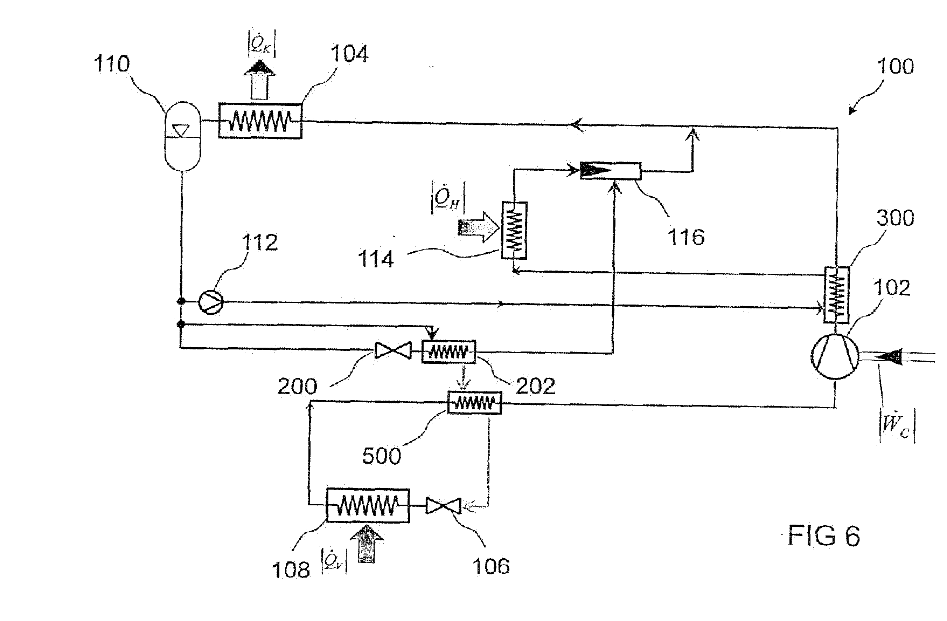

Fig. 6 zeigt einen weiteren Kältekreislauf 100 gemäß einem weiteren Ausführungsbeispiel der vorliegenden Erfindung. Der Kältekreislauf 100 weist einen internen Speisevorwärmer 300 und einen inneren Wärmeübertrager 500 (IWT) auf. Der Kältekreislauf 100 weist alle Merkmale des in Fig. 5 gezeigten Kältekreislaufs auf.

Gemäß diesem Ausführungsbeispiel ist der Zwischenwärmeübertrager 202 vor dem inneren Wärmeüberträger 500 angeordnet. Daher fließt das Fluid, das zur Drossel 106 fließt, zuerst durch den Zwischenwärmeübertrager 202, der durch einen Teil-Fluidstrom durch die weitere Drossel 200 gekühlt wird, und anschließend durch den inneren Wärmeübertrager 500. Dadurch wird das Fluid stark abgekühlt, bevor es in der Drossel 106 entspannt wird. Ein sehr niedriges Energieniveau im Verdampfer 108 ist so möglich. Im inneren Wärmeübertrager 500 wird das Fluid wieder überhitzt, bevor es zum Kompressor 102 gelangt.

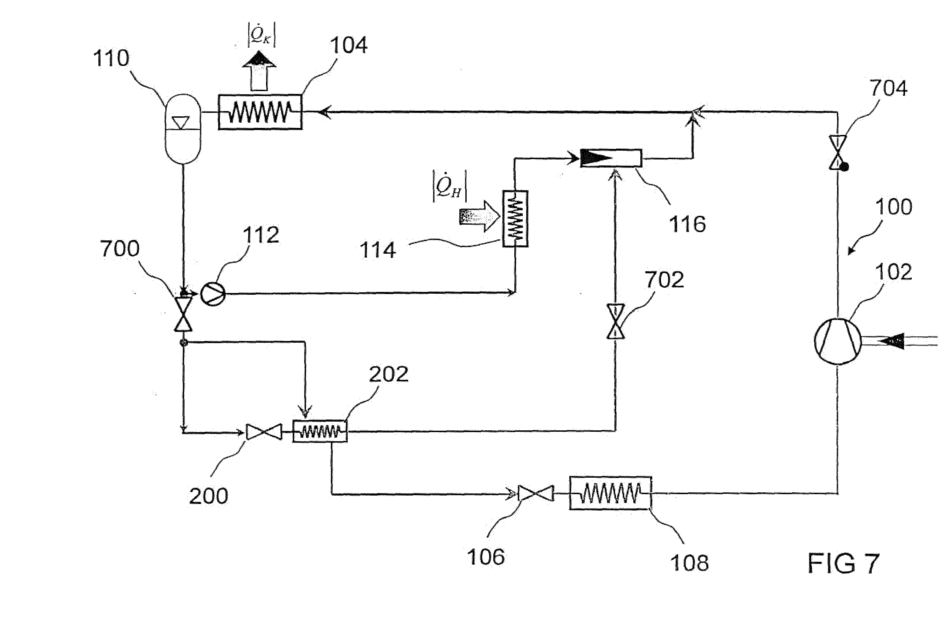

Fig. 7 zeigt eine Darstellung eines Kältekreislaufs 100 gemäß einem weiteren Ausführungsbeispiel der vorliegenden Erfindung. Der Kältekreislauf 100 weist die Merkmale des in Fig. 2 gezeigten Kältekreislaufs und zusätzlich ein erstes Absperrventil 700, ein zweites Absperrventil 702 und ein Rückschlagventil 704 auf.

Das erste Absperrventil 700 ist zwischen der Drossel 106 und dem Sammler 110 angeordnet. Zwischen dem ersten Absperrventil 700 und dem Sammler 110 zweigt der Fluidstrom zur Speisepumpe 112 ab. Das zweite Absperrventil 702 ist zwischen den Zwischenwärmeübertrager 202 und dem Ansaugeingang des Ejektors 116 angeordnet. Das Rückschlagventil 704 ist zwischen dem Kompressor 102 und dem Kondensator 104 angeordnet. Zwischen dem Rückschlagventil 704 und dem Kondensator 104 mündet der Fluidstrom durch den Ejektor 116. Mit den drei Ventilen 700, 702 und 704 kann der Kältekreislauf 100 von dem parallelen ORC-Prozess in der Speisepumpe 112, dem Wärmeübertrager 114, dem Ejektor 116 und dem Kondensator 104 abgetrennt werden. Wenn die Ventile 700,702 und 704 geschlossen sind, so wird die thermische Energie |*Q̇_{H}*| ohne das im Ejektor 116 arbeitsfähige Energie abgegriffen wird zum Kondensator 104 transportiert, und dort als thermische Energie |*Q̇_{K}*| abgegeben. Die Speisepumpe 112 transportiert dabei das Fluid im Kreislauf. Dadurch kann die thermische Energie |*Q̇_{H}*| ohne Verwendung des Kältekreislaufs 100 abgeführt werden, beispielsweise zur zusätzlichen Nutzung des Kondensators zur Motorkühlung in Fahrzeugen.

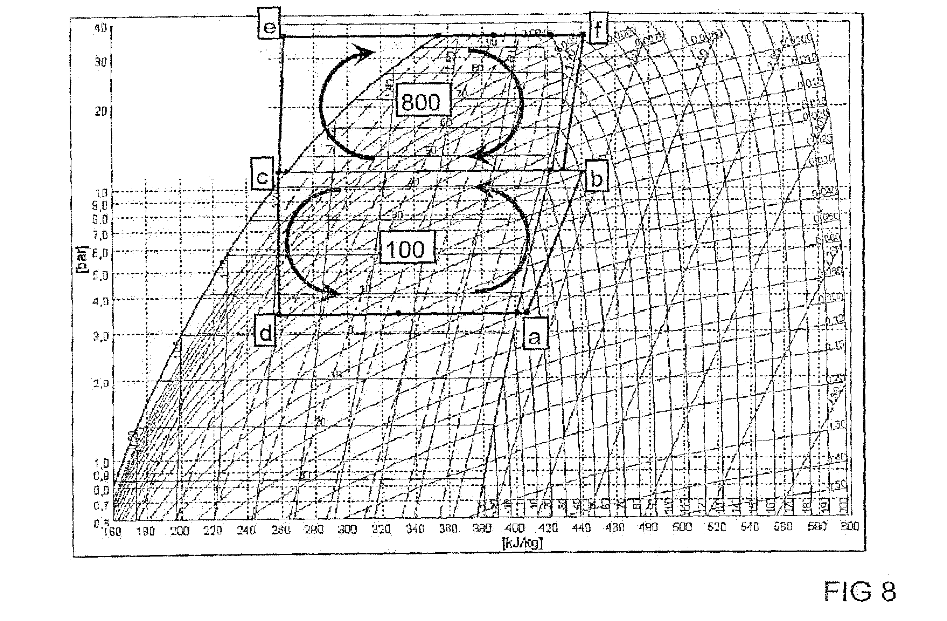

Fig. 8 zeigt ein Enthalpie/Druck-Diagramm (log-p-h Diagramm) eines Fluids, in diesem Ausführungsbeispiel R134a, mit einer vereinfachten Darstellung einer Kombination eines ORC-Prozesses 800 und eines Kältekreislaufs 100. Im Diagramm sind Zustandsänderungen des Fluids in einem Kältekreislauf 100 eingetragen. Zusätzlich sind Zustandsänderungen des Fluids in einem parallel ablaufenden ORC-Prozess 800 gemäß einem Ausführungsbeispiel der vorliegenden Erfindung eingezeichnet. Auf einer Abszisse des Enthalpie/Druck-Diagramms ist die Enthalpie h in Kilojoule pro Kilogramm angetragen. Auf einer Ordinate des Enthalpie/Druck-Diagramms ist der Druck p logarithmisch in Bar angetragen. Das Diagramm zeigt einen umrandeten Nassdampfbereich, in dem eine Temperatur bei gleich bleibendem Druck konstant ist, während sich ein Flüssigkeitsgehalt des Fluids bei einer Enthalpieveränderung ändert.

Im Kältekreislauf 100 wird das Fluid im gasförmigen Zustand, im Diagramm rechts des Nassdampfbereichs, von einem Kompressor unter Erwärmung auf einen mittleren Druck gebracht. Dies ist durch eine Linie zwischen den Punkten a und b repräsentiert. Auf mittlerem Druckniveau durchströmt das Fluid einen Kondensator. Dabei wird das Fluid bis zum Erreichen des Nassdampfbereichs abgekühlt und geht im Nassdampfbereich vom gasförmigen Zustand in einen flüssigen Zustand über, während thermische Energie abgegeben wird. Eine Temperatur bleibt im Nassdampfgebiet konstant. Dies ist durch eine gerade, horizontale Linie zwischen den Punkten b und c repräsentiert. Wenn das Fluid vollständig verflüssigt ist sinkt die Temperatur des Fluids erneut. Nach dem Kondensator strömt das Fluid durch eine Drossel, in der das Fluid vom mittleren Druckniveau auf ein niedriges Druckniveau entspannt wird. Dabei erfolgt keine Änderung der Enthalpie. Dies ist im Diagramm durch eine senkrechte Linie zwischen den Punkten c und d repräsentiert. In der Drossel verdampft das Fluid bereits teilweise. Anschließend strömt das Fluid bei konstantem Druck und konstanter Temperatur durch einen Verdampfer, in dem das Fluid thermische Energie aufnimmt, bis das Fluid vollständig verdampft ist. Dies wird durch eine waagerechte Linie zwischen den Punkten d und a repräsentiert. Nachdem alles Fluid verdampft ist steigt die Temperatur im Fluid an.

Im ORC-Prozess 800 wird das Fluid nach dem Kondensator in flüssigem Zustand aus dem mittleren Druckniveau von einer Speisepumpe auf einen hohen Druck gebracht. Dies ist im Diagramm durch eine Linie zwischen den Punkten c und e repräsentiert. Auf dem hohen Druckniveau strömt das Fluid durch einen Wärmeübertrager und nimmt dabei thermische Energie auf. Im Wärmeübertrager wird das Fluid zuerst bis zum Siedepunkt erwärmt und anschließend bei konstanter Temperatur vollständig verdampft. Anschließend wird das Fluid leicht überhitzt. Dies ist im Diagramm durch eine horizontale Linie zwischen den Punkten e und f repräsentiert, die über den Nassdampfbereich hinaus geht. Anschließend wird das Fluid in einer Expansionseinrichtung auf das mittlere Druckniveau entspannt, und eine innere Energie des Fluids wird in arbeitsfähige Energie umgewandelt. Die arbeitsfähige Energie wird zur Energieverbrauchsreduzierung des Kompressors im Kältekreislauf 100 verwendet. Das Entspannen des Fluids in der Expansionseinrichtung ist im Diagramm durch eine Linie zwischen den Punkten f und b repräsentiert. Das Fluid aus dem ORC-Prozess 800 strömt zusammen mit dem Fluid aus dem Kältekreislauf 100 durch den Kondensator wird dort abgekühlt, ändert seinen Aggregatzustand und gibt dabei thermische Energie ab. Dies ist wie beim Kältekreislauf 100 durch eine waagerechte Linie zwischen den Punkten b und c repräsentiert. Anschließend wird das Fluid erneut in der Speisepumpe auf das hohe Druckniveau gebracht.

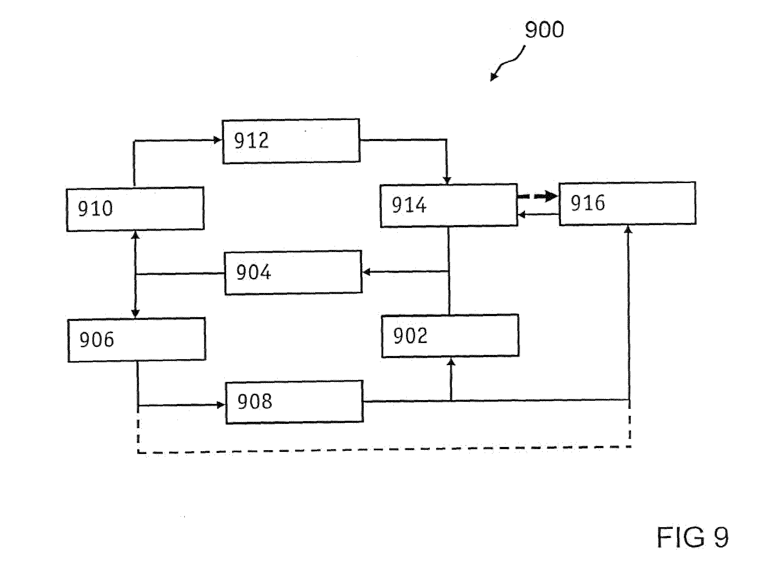

Fig. 9 zeigt ein Ablaufdiagramm eines Verfahrens 900 zum Umsetzen eines Kältekreislaufs gemäß einem Ausführungsbeispiel der vorliegenden Erfindung auf. Das Verfahren 900 weist einen Schritt 902 des Komprimierens, einen Schritt 904 des Kondensierens, einen Schritt 906 des Entspannens, einen Schritt 908 des Verdampfens, einen Schritt 910 des Pumpens, einen Schritt 912 des Erwärmens, einen Schritt 914 des Expandierens sowie einen Schritt 916 des Förderns auf.

Im Schritt 902 wird ein Fluid aus einem Niederdruckbereich des Kältekreislaufs in einem Mitteldruckbereich des Kältekreislauf komprimiert. Dabei wird arbeitsfähige Energie aufgewendet, um das Fluid von Niederdruckbereich in den Mitteldruckbereich zu verschieben. Im Schritt 902 des Komprimierens kann eine Temperatur des Fluids ansteigen. Im Schritt 904 wird dem Fluid im Mitteldruckbereich thermische Energie entzogen. Dabei geht das Fluid von einem gasförmigen Zustand zumindest teilweise in einen flüssigen Zustand über. Wenn das Fluid vollständig flüssig oder vollständig gasförmig ist, kann dabei eine Temperatur des Fluids reduziert werden. Im Schritt 906 wird das Fluid aus dem Mitteldruckbereich in den Niederdruckbereich entspannt. Dabei kann das Fluid teilweise verdampfen. Eine Temperatur des Fluids wird dabei reduziert. Im Schritt 908 des Verdampfens geht das Fluid aus dem flüssigen Zustand in dem gasförmigen Zustand über und nimmt thermische Energie auf. Solange noch ein flüssiger Anteil des Fluids vorhanden ist, bleibt eine Temperatur des Fluids konstant. Wenn das Fluid vollständig gasförmig ist, kann eine Temperatur des Fluids erhöht werden. Dieser Vorgang wird als Überhitzen bezeichnet. Anschließend wird das Fluid wieder im Schritt 902 aus dem Niederdruckbereich in den Mitteldruckbereich verschoben. Im Schritt 910 wird das Fluid in flüssigem Zustand in einem Hochdruckbereich gepumpt. Da das Fluid in flüssigem Zustand näherungsweise inkompressibel ist wird nur eine geringe Menge mechanischer Energie für eine Druckerhöhung benötigt. Im Schritt 912 des Erwärmens nimmt das Fluid thermische Energie aus einem Abwärmestrom oder aus Solarwärme auf. Dabei kann eine Temperatur im Fluid einen Siedepunkt überschreiten, und das Fluid teilweise oder ganz verdampfen. Wenn genügend Wärme auf einem hohen Temperaturniveau zur Verfügung steht kann das Fluid überhitzt werden. Im Schritt 914 wird das Fluid in einer Expansionseinrichtung in den Mitteldruckbereich entspannt. Dabei wird arbeitsfähige Energie frei. Beispielsweise wird das Fluid in einer Turbine entspannt. Dabei kann Rotationsenergie gewonnen werden. Ebenso kann das Fluid in einer Strahlpumpe oder einem Ejektor entspannt werden. Im Schritt 916 wird die freiwerdende arbeitsfähige Energie genutzt, um Fluid aus dem Niederdruckbereich in den Mitteldruckbereich zu fördern. Dabei kann beispielsweise ein Fluidstrahl im Ejektor mit hoher Geschwindigkeit einen Fluidstrom ansaugen und mitreißen. An einem Ausgang des Ejektors erreichen der Fluidstrahl und der Fluidstrom das Druckniveau des Mitteldruckbereichs. Ebenso kann die Rotationsenergie aus der Turbine in einer Rotationspumpe genutzt werden. Die arbeitsfähige Energie kann auch direkt im Schritt 902 des Verdichtens genutzt werden. Alternativ oder ergänzend kann der Fluidstrom auch an einer anderen Stelle aus dem Niederdruckbereich angesaugt werden, nachdem der Fluidstrom Wärmeenergie in einem nicht gezeigten Hilfsschritt aufgenommen hat.

Die beschriebenen Ausführungsbeispiele sind nur beispielhaft gewählt und können miteinander kombiniert werden.

## Patentansprüche

1. Vorrichtung zur Energieverbrauchsreduzierung eines Kompressors in einem Kältekreislauf (100), wobei der Kompressor (102) einen Kompressoreingang und einen Kompressorausgang aufweist, wobei die Vorrichtung die folgenden Merkmale aufweist:
einen Kondensator (104), mit einem Kondensatoreingang und einem Kondensatorausgang, wobei der der Kondensatoreingang mit dem Kompressorausgang verbunden ist;
eine Drossel (106), mit einem Drosseleingang und einen Drosselausgang, wobei der Drosseleingang mit dem Kondensatorausgang verbunden ist;
einen Niederdruckbereich, der mit dem Drosselausgang und dem Kompressoreingang verbunden ist;
einen Verdampfer (108), der in dem Niederdruckbereich angeordnet ist;
einer Speisepumpe (112), mit einem Speisepumpeneingang und einem Speisepumpenausgang, wobei der Speisepumpeneingang mit dem Kondensatorausgang verbunden ist;
einen Wärmeübertrager (114), mit einem Wärmeübertragereingang und einem Wärmeübertragerausgang, wobei der Wärmeübertragereingang mit dem Speisepumpenausgang verbunden ist; und
eine Expansionsernrichtung (116), mit einem Expansionseinrichtungseingang und einem Expansionseinrichtungsausgang sowie einem Ansaugeingang, wobei der Expansionseinrichtungseingang mit dem Wärmeübertragerausgang verbunden ist und der Expansionseinrichtungsausgang mit dem Kondensatoreingang verbunden ist und der Ansaugeingang mit dem Niederdruckbereich verbunden ist.

2. Vorrichtung gemäß Anspruch 1, bei der der Verdampfer (108) einen Verdampferausgang aufweist und der Ansaugeingang mit dem Verdampferausgang verbunden ist.

3. Vorrichtung gemäß Anspruch 1, mit einer weiteren Drossel (200), die zwischen dem Kondensatorausgang und dem Ansaugeingang angeordnet ist, wobei zwischen der weiteren Drossel (200) und dem Ansaugeingang ein Zwischenwärmeübertrager (202) angeordnet ist.

4. Vorrichtung gemäß einem der vorangegangenen Ansprüche, mit einem inneren Wärmeübertrager (500), der zwischen dem Verdampferausgang und dem Kompressoreingang angeordnet ist.

5. Vorrichtung gemäß Anspruch 3 und 4, bei der der innere Wärmeübertrager (500) zwischen dem Kondensatorausgang und der weiteren Drossel (200) angeordnet ist.

6. Vorrichtung gemäß Anspruch 3 und 4, bei der der innere Wärmeübertrager (500) zwischen dem Zwischenwärmeübertrager (202) und dem Drosseleingang angeordnet ist.

7. Vorrichtung gemäß einem der Anspruche 3 bis 6, bei der der innere Wärmeübertrager (500) ferner zwischen dem Kondensatorausgang und dem Drosseleingang angeordnet ist.

8. Vorrichtung gemäß einem der vorangegangenen Ansprüche, mit einem Speisevorwärmer (300), der zwischen dem Speisepumpenausgang und dem Wärmeübertragereingang angeordnet ist und/oder der zwischen dem Kompressorausgang und dem Kondensatoreingang angeordnet ist.

9. Kältekreislauf (100) mit folgenden Merkmalen:
einem Kompressor (102), der einen Kompressoreingang und einen Kompressorausgang aufweist; und
einer Vorrichtung gemäß einem der Ansprüche 1 bis 8.

10. Verfahren (900) mit folgenden Schritten:
Komprimieren (902) eines Fluids aus einem Niederdruckbereich des Kältekreislaufs (100) in einen Mitteldruckbereich des Kältekreislaufs (100);
Kondensieren (904) des Fluids im Mitteldruckbereich;
Entspannen (906) des Fluids aus dem Mitteldruckbereich in den Niederdruckbereich;
Verdampfen (908) des Fluids im Niederdruckbereich;
Pumpen (910) des Fluids aus dem Mitteldruckbereich in einen Hochdruckbereich;
Erwärmen und/oder verdampfen (912) des Fluids im Hochdruckbereich;
Expandieren (914) des Fluids aus dem Hochdruckbereich in den Mitteldruckbereich unter Abgabe von Energie; und
Fördern und/oder komprimieren (916) des Fluids aus dem Niederdruckbereich in den Mitteldruckbereich unter Verwendung der Energie.
